Europäisches Patentamt

European Patent Office

Office européen des brevets

(11) Veröffentlichungsnummer: **0 279 215 B1**

# EUROPÄISCHE PATENTSCHRIFT

(45) Veröffentlichungstag der Patentschrift:
03.04.91 Patentblatt 91/14

(51) Int. Cl.⁵: **A47B 17/00, F16B 12/32,** F16B 12/40

(21) Anmeldenummer: 88100965.8

(22) Anmeldetag: 22.01.88

(54) Knotenpunktkörper zum Aufbau von Einrichtungsgegenständen, Gestellen, Fachwerken u. dgl.

(30) Priorität: 16.02.87 DE 3704831

(43) Veröffentlichungstag der Anmeldung:
24.08.88 Patentblatt 88/34

(45) Bekanntmachung des Hinweises auf die
Patenterteilung:
03.04.91 Patentblatt 91/14

(84) Benannte Vertragsstaaten:
AT BE CH DE ES FR GB IT LI NL SE

(56) Entgegenhaltungen:
DD-A- 148 974
DE-A- 2 524 907
DE-A- 3 149 395
DE-A- 3 207 966
GB-A- 1 265 889

(73) Patentinhaber: Städtler, Marc-Michael,
Dipl.-Ing.
Alte Rathausstrasse 22
W-8205 Kiefersfelden (DE)

(72) Erfinder: Städtler, Marc-Michael, Dipl.-Ing.
Alte Rathausstrasse 22
W-8205 Kiefersfelden (DE)

(74) Vertreter: Kern, Wolfgang, Dipl.-Ing. et al
Patentanwälte Tischer, Kern & Brehm
Albert-Rosshaupter-Strasse 73
W-8000 München 70 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Knotenpunktkörper zum Aufbau von Einrichtungsgegenständen, Gestellen, Fachwerken o. dgl., insbesondere Arbeitsplatteneinrichtungen für Büros, bestehend aus mehreren Komponenten, die durch Tragelemente und Halterungselemente miteinander verbindbar und auf Ständern in bestimmten Höhen über dem Erdboden anbringbar sind, wobei jeder Knotenpunktkörper mehrteilig ausgebildet und mit wenigstens einer zweigeteilten Durchgangsbohrung versehen ist, und wobei jedes Tragelement ein stangenförmiger oder plattenförmiger Körper ist, der in die Durchgangsbohrungen des Knotenpunktkörpers einsteckbar und durch Zusammenklemmen der einzelnen Teile des Knotenpunktkörpers mit letzteren fest verbindbar ist, wobei in dem Knotenpunktkörper wenigstens zwei parallele Durchgangsbohrungen angeordnet sind, durch die sich zentrisch die Teilungsebene bzw. -ebenen des Knotenpunktkörpers erstrecken.

Der bekannte Knotenpunktkörper dieser Art (DE-OS 3149395) hat nicht nur den Nachteil, daß seine Teilungsebene so gelegt ist, daß sie paarweise parallele Anordnungen von stangen- bzw. plattenförmigen Baukörpern, die durch derartige Knotenpunktkörper verbunden werden sollen, unmöglich macht, sondern er läßt sich aufgrund seiner komplizierten Konfiguration hinsichtlich des Verlaufs der Teilungsebene auch nur mit einem relativ großen Kostenaufwand herstellen.

Bekannte Baukastensysteme (DE-OS 3135576), in denen derartige Knotenpunktkörper Verwendung finden, haben sich zur Aufgabe gemacht, eine möglichst vielseitige variable Einrichtung zu verwirklichen, die die objektiven und subjektiven Bedürfnisse der Benutzer möglichst optimal erfüllt. Sie gehen dabei von der Vorstellung aus, daß solche Baukastensysteme für Einrichtungsgegenstände in der Lage sein sollen, Arbeitsplätze für an sich beliebige Berufsgruppen schnell und preiswert herstellen zu können, zu denen beispielsweise Schreibtische, Aktenschränke, Konferenztische, Regale, Beistelltische, Kästen, Materialschränke, Stühle u. dgl. gehören, wobei darüberhinaus die Möglichkeit der leichten Anpassung dieser Gegenstände an sich ändernde Arbeits-bzw. Arbeitsplatzbedingungen gegeben sein soll. Solche Anpassungen sind insbesondere bei Einrichtungsgegenständen für die Datenverarbeitung notwendig, da beispielsweise Computertische auch für sich durch die rasche Entwicklung schnell ändernde Gerätetypen und zugehörige Einrichtungen schon aus Kostenerwägungen benutzbar bleiben müssen. Da auch relativ kleine Firmen bereits mit rechnergesteuerten Maschinen arbeiten, müssen die Einrichtungsgegenstände für das Personal an Datenendgeräte, Monitore, Drucker u. dgl. anpaßbar sein, ohne daß durch diese Anpassung die weiterhin notwendigen Arbeitsflächen für andere Tätigkeiten zu stark eingeschränkt werden müssen.

Das Baukastensystem bietet hierzu mit besonderen Träger-und Ständervorrichtungen, die zur Erhaltung verschiedener Komponenten dienen, zwar eine Lösung an, die jedoch nicht allen Gestaltungswünschen Rechnung trägt und insbesondere hinsichtlich der benötigten Bauelemente das System ziemlich aufwendig macht.

Es ist ferner aus der DE-A-3 207 966 ein Baukastensystem zum Aufbau von Einrichtungsgegenständen der genannten Art bekannt, bestehend aus mehreren Komponenten, die durch Tragelemente und Halterungselemente miteinander verbindbar und auf Ständern in bestimmten Höhen über dem Erdboden anbringbar sind, wobei in einem Knotenpunktkörper neben Rohren bzw. Stangen auch flachgeformte Elemente zur Anwendung kommen, jedoch nicht die Möglichkeit geboten wird, parallele und/oder sich kreuzende Baukörper-Verbindungen herzustellen, bei denen die stangenförmigen Baukörper sich durch die Durchgangsbohrungen des Knotenpunktkörpers vollständig hindurcherstrecken.

Die Aufgabe der Erfindung besteht deshalb darin, den Knotenpunktkörper der eingangs genannten Art so auszubilden, daß er sich zum Aufbau und zur Herstellung von parallelen, stangenförmigen oder plattenförmigen Baukörpern eignet, wobei Parallelität solcher Körper auf mehreren Ebenen ermöglicht werden soll und der Knotenpunktkörper ein relativ einfach herstellbarer und mechanisch bearbeitbarer Körper einfacher geometrischer Form sein soll.

Diese Aufgabe wird mit den Merkmalen des Anspruchs 1 gelöst, gemäß denen der Knotenpunktkörper ein entlang zweier aufeinander senkrecht stehender Ebenen in vier gleiche Teile geteilter Würfel oder Quader besonderer Konfiguration ist. Eine weitere Lösung dieser Aufgabe ist im Anspruch 3 gekennzeichnet, wonach der Knotenpunktkörper ein Zylinder aus vier gleichen, axialsymmetrischen Teilen besonderer Konfiguration ist.

Das wesentliche Merkmal dieser beiden Lösungsvorschläge ist darin zu sehen, daß jeweils zwei Bohrungen in den Seiten des Körpers so angeordnet werden, daß die Tragelemente in vielfältigster Weise miteinander kombiniert werden können, wobei der Knotenpunktkörper selbst als Bestandteil eines Baukastensystems zum Aufbau von Einrichtungsgegenständen der genannten Art relativ wenig Platz beansprucht und außerdem nur einen vergleichsweise geringen Herstellungsaufwand erfordert.

Vorteilhafte Ausgestaltungen der Erfindung sind in den Ansprüchen 2 und 4 gekennzeichnet.

Die Erfindung wird nachfolgend anhand von in der Zeichnung dargestellten Ausführungsbeispielen näher erläutert.

In der Zeichnung zeigen :

Fig. 1 eine schematische perspektivische Ansicht eines zweiteiligen, plattenförmigen Halterungselements mit zwei eingeklemmten stangenförmigen Baukörpern,

Fig. 2 eine schematische perspektivische Ansicht-eines plattenförmigen Halterungselements, in das ein stangenförmiger und ein plattenförmiger Baukörper eingeklemmt sind,

Fig. 3 eine perspektivische Ansicht eines plattenförmigen Halterungselements ähnlich demjenigen von Fig. 1, das jedoch eine seitliche Fortsetzung aufweist,

Fig. 4 eine perspektivische Ansicht eines plattenförmigen Halterungselements mit ein unrundes Querschnittsprofil aufweisenden Durchgangsbohrungen und in diese einsetzbare Paßstücke,

Fig. 5 a-i schematische Darstellungen von Beispielen für den Zusammenbau der plattenförmigen Halterungselemente mit stangen- und plattenförmigen Baukörpern (jeweils in Draufsicht und Stirnansicht),

Fig. 6 eine Explosionsdarstellung zweier aus plattenförmigen Halterungselementen und stabförmigen Tragelementen zusammenbaubarer Rahmenkörper, die durch seitliche, plattenförmige Wandelemente zu einem kastenförmigen Körper ergänzbar sind,

Fig. 7 eine schematische, perspektivische Ansicht eines Knotenpunktkörpers als Halterungselement in Form eines in vier gleiche Teile geteilten Würfels mit in den Durchgangsbohrungen sitzenden, sich rechtwinkelig kreuzenden, stangenförmigen Baukörpern,

Fig. 8 eine perspektivische Darstellung eines Knotenpunktkörpers, der einen aus zwei gleichen Hälften bestehenden Quader bildet,

Fig. 9 a-f bildhafte Darstellungen von Anwendungsfällen des Knotenpunktkörpers von Fig. 8 in Verbindung mit stangenförmigen und plattenförmigen Baukörpern,

Fig. 10 eine schematische Draufsicht auf vier quaderförmige Knotenpunktkörper von Fig. 8, die durch stangenförmige Baukörper verbunden sind,

Fig. 11 eine perspektivische Darstellung eines aus Halterungselementen und Tragelementen der erfindungsgemäßen Art zusammengebauten Schreibtisches als Einrichtungsgegenstand,

Fig. 12 eine schematische perspektivische Darstellung eines aus den erfindungsgemäßen Halterungselementen und Tragelementen zusammengebauten Gestells für EDV-Geräte mit möglichem Arbeitsplattenvorbau,

Fig. 13 eine schematische perspektivische Ansicht eines Knotenpunktkörpers in Form eines zweiteiligen Quaders dreieckigen Umrisses,

Fig. 14 a-f schematische Draufsichten von Anwendungsbeispielen des Quaders von Fig. 13 als Verbinder für stangen- bzw. plattenförmige Baukörper,

Fig. 15 a-d schematische Draufsichten von aus Quadern von Fig. 13 und stangenförmigen Körpern hergestellten Fachwerkträgern und Ständern,

Fig. 16 eine schematische perspektivische Ansicht eines zweiteiligen Quaders dreieckigen Umrisses, ähnlich dem von Fig. 13 mit die Seitenflächen des Quaders durchgreifenden Durchgangsbohrungen,

Fig. 17 a-c Draufsichten von Anwendungsbeispielen für den Quader nach Fig. 16,

Fig. 18 eine schematische perspektivische Ansicht eines in Form eines mehrteiligen Zylinders ausgebildeten Knotenpunktkörpers,

Fig. 19 eine Draufsicht des Knotenpunktkörpers von Fig. 18,

Fig. 20 eine Explosionsdarstellung des Knotenpunktkörpers von Fig. 18 und 19,

Fig. 21 a-f Draufsichten und Stirnansichten von Anwendungsbeispielen des einen mehrteiligen Zylinder bildenden Knotenpunktkörpers, und

Fig. 22 a-e schematische perspektivische Darstellungen sowie Vorderansichten und Draufsichten von verschiedenen Einrichtungsgegenständen als Beispiele für die vielseitige Verwendbarkeit des erfindungsgemäßen Baukastensystems.

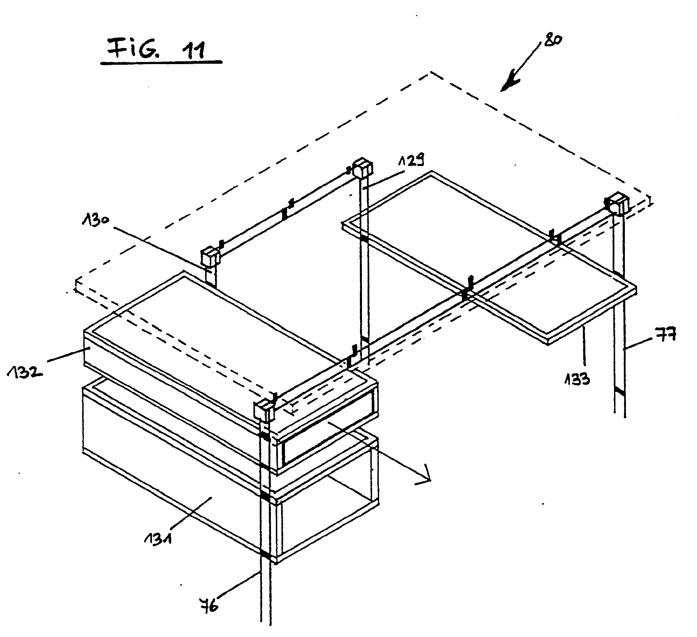

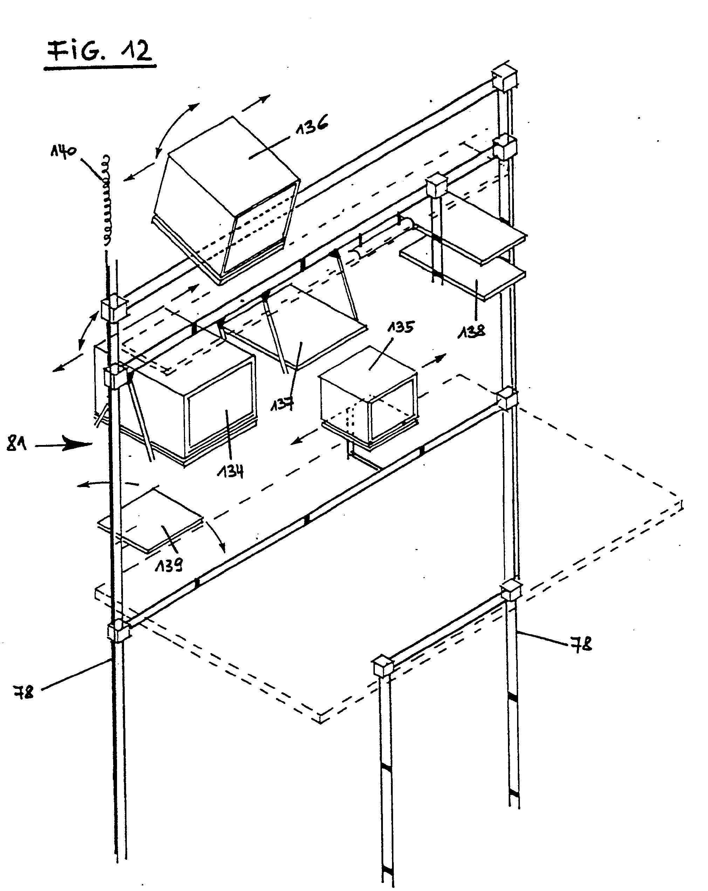

Zur Herstellung von Einrichtungsgegenständen, Gestellen, Fachwerk u. dgl., insbesondere Arbeitsplatzeinrichtungen für Büros u. dgl., wie sie beispielsweise in den Figuren 11 und 12 dargestellt sind, dienen Halterungselemente, bestehend aus wenigstens einem mehrteiligen, zusammensetzbaren Knotenpunktkörper mit wenigstens einer Durchgangsbohrung, wobei sich die Teilungsebene dieses mehrteiligen Knotenpunktkörpers durch diese Durchgangsbohrungen erstreckt, sowie Tragelemente in Form von stangenförmigen oder plattenförmigen Baukörpern, die in die zweigeteilte Durchgangsbohrung des Knotenpunktkörpers einsteckbar und durch Zusammenklemmen der einzelnen Teile des Knotenpunktkörpers mit letzterem fest verbindbar sind.

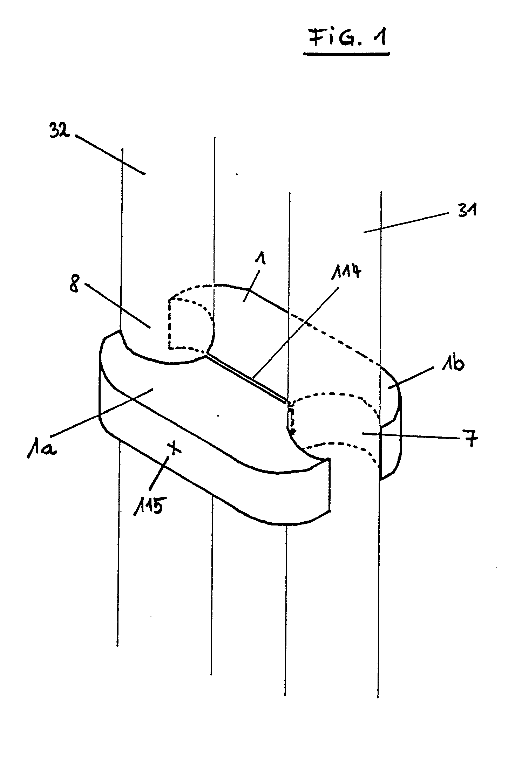

In Fig. 1 ist ein solcher Knotenpunktkörper 1 in Form einer rechteckigen Platte mit abgerundeten Ecken dargestellt, der aus den beiden gleich großen Teilen 1a und 1b besteht, die spiegelbildlich zur Teilungsebene 114 nebeneinander angeordnet sind, Zwei gegenüberliegende Seiten der vier Seitenflächen des Knotenpunktkörpers 1 sind mit sich in Richtung der Dicke der viereckigen Platte erstreckenden Durchgangsbohrungen 7, 8 ausgestattet, in die stangenförmige Baukörper 31, 32, die von Rohren gebildet werden, hindurchgesteckt werden. Die Durchgangsbohrungen liegen je zur Hälfte in dem einen Teil 1a und anderen Teil 1b der Platte, was bedeutet, daß die Teilungsebene 114 sich entlang der Verbindungsgeraden der beiden Bohrungsmittelpunkte erstreckt.

Die beiden stangenförmigen Baukörper 31 und 32 werden mit dem Knotenpunktkörper 1 dadurch fest verbunden, daß die beiden Teile 1a und 1b mit Hilfe einer bei 115 angedeuteten Schraube, die die Teilungsebene 114 durchdringt, miteinander verschraubt werden. Durch Lösen dieser Verschraubung läßt sich, falls gewünscht, die Lage des Knotenpunktkörpers in bezug auf die Baukörper 31 und 32, die gemeinsam ein Bein eines Tisches oder Stuhls sein können, beliebig verändern. Dies bedeutet nicht, daß beim Lösen der Schraube die beiden Teile 1a und 1b tatsächlich voneinander vollständig getrennt werden müssen, um so eine Lageveränderung zuzulassen, vielmehr bedarf es nur eines Lockerns der Schraube, so daß die Klemmwirkung, die von der Wandung der Durchgangsbohrungen 7 und 8 auf die Baukörper 31 und 32 ausgeht, aufgehoben oder jedenfalls erheblich reduziert wird.

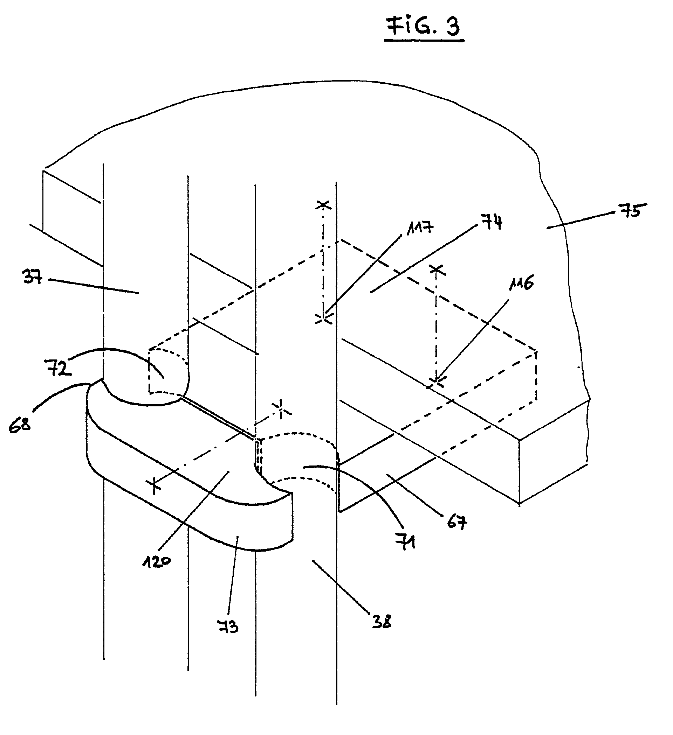

In Fig. 3 ist eine Weiterbildung des in Fig. 1 dargestellten Aufbauprinzips gezeigt, bei der die in Fig. 1 mit 1b bezeichnete Hälfte des Knotenpunktkörpers 120 eine seitliche Fortsetzung aufweist, die eine Konsole 74 zur Aufnahme einer Wand- oder Bodenplatte 75 bildet, die bei 116 und 117 mit der Konsole 74 verschraubt ist. Im übrigen wird auch dieser Knotenpunktkörper auf den beiden gegenüberliegenden Seiten 67 und 68 von sich durch die Plattendicke erstreckenden Durchgangsbohrungen 71. 72 durchzogen, in denen die stangenförmigen Baukörper 37, 38 sitzen, die mit Hilfe der in Fig. 1 beschriebenen Schraubverbindung mit dem Knotenpunktkörper fest verspannt werden können.

Es versteht sich, daß die Wand- oder Bodenplatte 75 an ihrem anderen Ende auf einer Konsole 74 gleicher oder ähnlicher Ausbildung wie der in Fig. 3 gezeigten aufliegen kann, die wiederum Teil eines Knotenpunktkörpers ist, der auf wenigstens einem, zweckmäßigerweise jedoch zwei- oder mehr stangenförmigen Baukörpern der bei 37 und 38 gezeigten Art abgestützt ist. Auf diese Weise läßt sich in an sich beliebiger, einstellbarer Höhe eine Arbeitsplatte anordnen, die entweder selbst den zu schaffenden Einrichtungsgegenstand bildet oder Teil einer an sich beliebigen Arbeitsplatzeinrichtung ist.

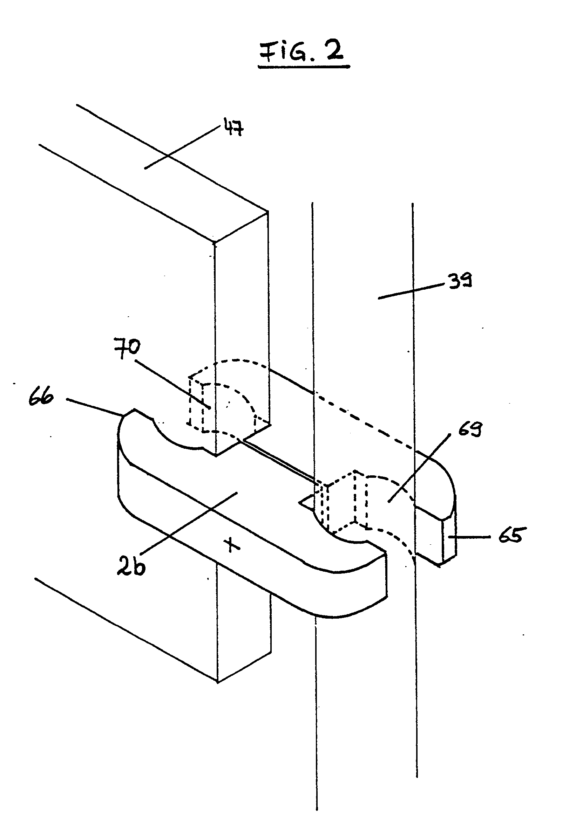

Die in Fig. 2 gezeigte Ausführungsform des Knotenpunktkörpers 2b unterscheidet sich von der in Fig. 1 gezeigten nur darin, daß die beiden Durchgangsbohrungen 69 und 70 an den beiden gegenüberliegenden Stirnseiten 65 bzw. 66 dieses Körpers keinen runden Querschnitt besitzen, sondern einen profilierten Querschnitt, der so geformt ist, daß er sowohl zur Aufnahme eines stangenförmigen Baukörpers 39 runden Querschnitts als auch zur Aufnahme eines plattenförmigen Baukörpers 47 dienen kann, dessen Umrisse in Fig. 2 nur angedeutet sind. Wie der stangenförmige Baukörper, so wird auch der plattenförmige Baukörper durch Zusammenschrauben der beiden Teile des Knotenpunktkörpers 2b fest eingespannt.

Man kann sich vorstellen, daß der Baukörper 39 ein Bein eines zweibeinigen Ständers sein kann, der mit Hilfe zweier Knotenpunktkörper 2b zur Halterung einer Tafel in einer einstellbaren Höhe über dem Boden beispielsweise benutzbar ist.

Der in Fig. 3 perspektivisch dargestellte Knotenpunktkörper 2 ist gestaltmäßig mit dem Knotenpunktkörper 2b von Fig. 2 vergleichbar, ist also auch in einer parallel zu seiner Längsseite 2 verlaufenden und sich durch die beiden Mittelpunkte der Durchgangsbohrungen 9 und 10 erstreckenden Ebenen in zwei gleiche Teile aufgeteilt, die sich miteinander verschrauben oder verklemmen lassen, jedoch auch verschweißt werden können, falls die Verbindung später nicht mehr gelöst werden soll. In die Durchgangsbohrungen passen die Paßstücke 90, 91 und 92, die zweckmäßigerweise durch Ausstanzen aus dem plattenförmigen Knotenpunktkörper bei der Herstellung der Durchgangsbohrungen erhalten werden. Das eine Paßstück 91 ist dabei so beschaffen, daß es den Durchgangsquerschnitt vollständig ausfüllt, d.h., mit seinem äußeren Ende die Stirnseiten 63 und 64 des Knotenpunktkörpers 2 bündig abschließt.

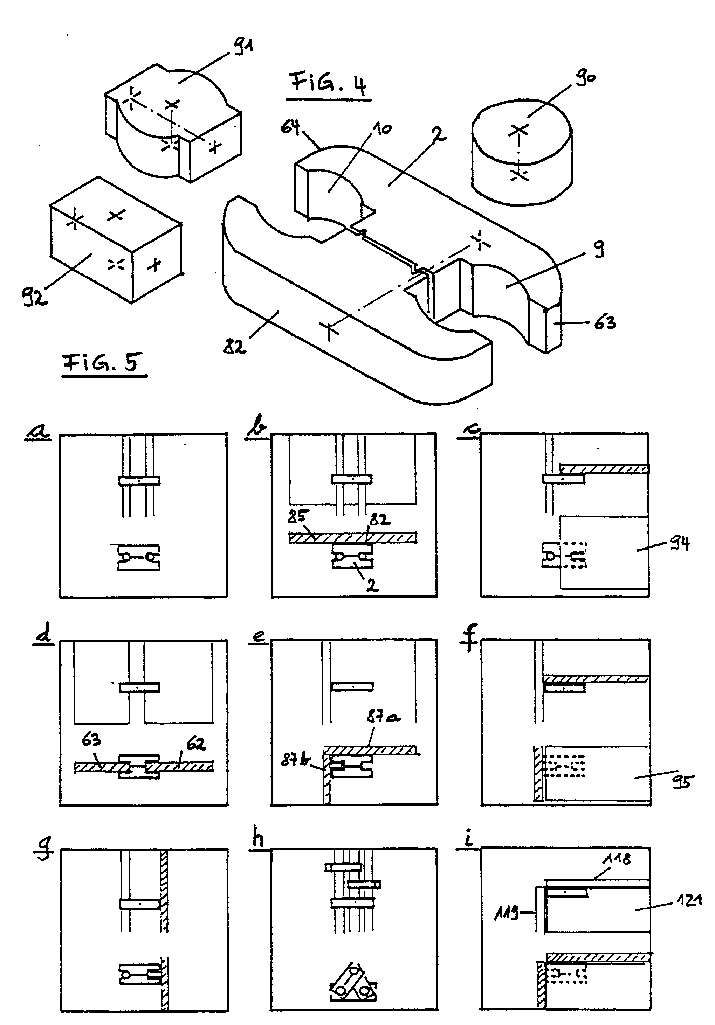

Derartige Paßstücke können mit Wand- oder Bodenplatten der bei 94 und 95 in den Fig. 5c und 5f gezeigten Art verschraubt werden zu dem Zweck, in die betreffende Durchgangsöffnung 9 oder 10 einzurasten und damit die Wand- oder Bodenplatte auf dem Knotenpunktkörper 2 nicht in Art der Platte 47 in Fig. 2 in senkrechter Lage, sondern in waagrechter Lage festzuhalten, während die zweite Durchgangsbohrung 9 von einem stangenförmigen Baukörper 39 durchquert wird.

In den Fig. 5a-5i sind Anwendungsbeispiele für die Verbindungsmöglichkeiten von Knotenpunktkörpern der bei 2, 2a und 2b in den Figuren 1 bis 4 gezeigten Art mit stangenförmigen und/oder plattenförmigen Baukörpern skizziert.

So zeigt Fig. 5a in Grundriß und Aufriß den Knotenpunktkörper 2 mit zwei seine Durchgangsbohrungen durchquerenden Stangen oder Rohren, Fig. 5b ein mit 5a vergleichbares Konstruktionsdetail, bei dem jedoch an der Seite 82 des Knotenpunktkörpers 2 eine Platte 85 angebracht ist, die beim Zusammenschrauben der beiden Teile des Knotenpunktkörpers 2 gleichzeitig mit an diesem Körper befestigt werden kann.

5c zeigt den oben bereits erwähnten Fall der Auflage eines plattenförmigen Baukörpers 94 nach Anbringung des Paßstücks 91, das in die dafür vorgesehene Durchgangsbohrung 10 einrastet.

In Fig. 5d sind zwei plattenförmige Baukörper der bei 47 in Fig. 2 gezeigten Art in die gegenüberliegenden Durchgangsbohrungen 69 und 70 eines Knotenpunktkörpers 2b eingesteckt.

In Fig. 5e dient ein Knotenpunktkörper 2 oder 1 der in den Fig. 1 und 4 gezeigten Art zur Verbindung zweier plattenförmiger Baukörper 87a, 87b, die rechtwinklig aufeinanderstoßen.

In Fig. 5f ist der Fall in Aufriß und Grundriß dargestellt, bei dem ein plattenförmiger Baukörper 95 an einen senkrecht stehenden Wandkörper anstößt und von diesem mittels eines Knotenpunktkörpers getragen wird.

Fig. 5g zeigt die Verbindungsmöglichkeit zwischen einem bestehenden stangen- oder rohrförmigen Baukörper und einer Platte über einen Knotenpunktkörper mittels Paßstück, das in eine der Durchgangsbohrungen des Knotenpunktkörpers eingreift.

Fig. 5h zeigt ebenfalls in Grund- und Aufriß den Zusammenschluß von drei mit Abstand nebeneinander stehenden stangenförmigen Baukörpern der in den Fig. 1 bis 3 mit 31, 32, 37, 38 und 39 bezeichneten Art zu einem drei parallele Beine formenden Gebilde, wobei die einzelnen plattenförmigen Knotenpunktkörper übereinandersitzen.

In Fig. 5i ist ein Konstruktionsdetail in Grund- und Seitenriß dargestellt, das die Ecke eines Kubus bildet, dessen tischartige Arbeitsplatte 118 mit Hilfe eines Knotenpunktkörpers 2, 2a, 2b, 120 sowohl mit der Seitenwandplatte 119 als auch mit der Rückwandplatte 121 verbunden werden kann.

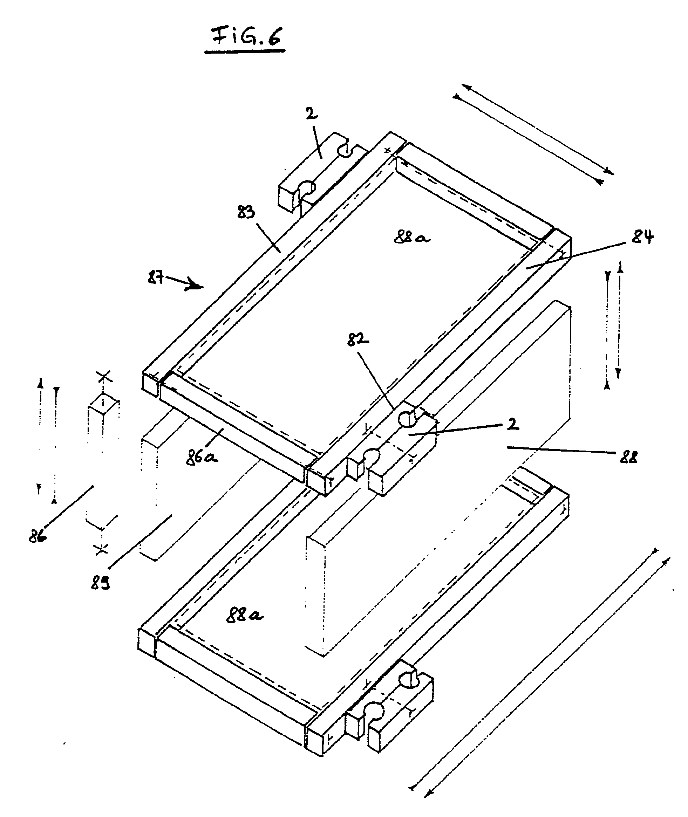

Das in Fig. 6 dargestellte Explosionsbild zeigt in perspektivischer Darstellung den Zusammenbau mehrerer plattenförmiger Knotenpunktkörper 2 mit stabförmigen Tragelementen 83, 84, 86 zur Bildung eines Rahmenkörpers 87, wobei, wie anhand von Fig. 5b erläutert, beim Zusammenschrauben der beiden Teile des zweigeteilten Knotenpunktkörpers 2 gleichzeitig an der Seite 82 das stabförmige Tragelement 84 angeschraubt wird und die flankenförmigen Baukörper 88, 89 als Seitenwände mit Hilfe von in die Durchgangsbohrungen einsteckbaren Paßstücken, die an den Stirnseiten dieser Baukörper angebracht werden, mit dem oberen und unteren Rahmenkörper 87 verbindbar sind. Zur Vervollständigung des auf diese Weise herzustellenden quaderförmigen Gebildes werden die seitlichen, stabförmigen Tragelemente 86 und 86a mit den in Längsrichtung verlaufenden stabförmigen Tragelementen 83 und 84 verschraubt.

Die stabförmigen Tragelemente 83, 84, 86, 86a können auch mit einem Falz zur Aufnahme von in Fig. 6 durch gestrichelte Linien angedeuteten Wandplatten 88a versehen sein, die ihrerseits aus einem an sich beliebigen festen Werkstoff, also beispielsweise auch aus Glas, bestehen können.

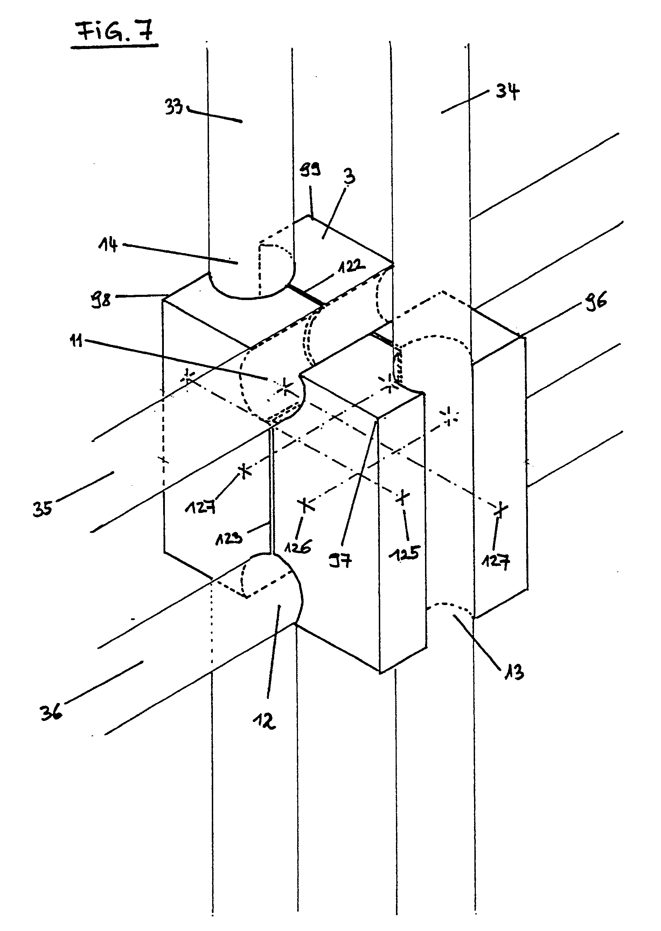

Anstelle eines plattenförmigen, zweiteiligen Knotenpunktkörpers der in den Fig. 1 bis 6 gezeigten Art oder zusammen mit diesem kann ein in Fig. 7 in perspektivischer Darstellung gezeigter Knotenpunktkörper 3 Verwendung finden, der entlang zweier aufeinander senkrecht stehender Ebenen 122 und 123 in vier gleiche Teile 96, 97, 98, 99 unterteilt ist und somit einen Würfel bildet, welcher auf vier seiner sechs paarweise einander gegenüberliegenden Außenseiten von wenigstens je zwei parallelen Durchgangsbohrungen 11, 12, 13, 14 durchzogen ist, die, wie im Falle des zweiteiligen Knotenpunktkörpers der oben beschriebenen Art zur Aufnahme von wenigstens je einem Tragelement 33, 34, 35, 36 dienen. Auch hier sind der Durchmesser der Durchgangsbohrungen, der Umfang der Tragelemente 33 bis 36, die beispielsweise Rohre bilden, sowie der Abstand der vier Würfelteile an den Teilungsebenen 122 und 123 so getroffen, daß beim Zusammenschrauben der vier Teile mit Hilfe der bei 124, 125, 126 und 127 angedeuteten Schrauben die in den sich rechtwinkelig kreuzenden Durchgangsbohrungen 11, 12, 13, 14 sitzenden vier stab- bzw. rohrförmigen Baukörper mit den Bohrungswänden verklemmt werden und auf diese Weise das gesamte Gebilde einen festen Zusammenhalt erhält.

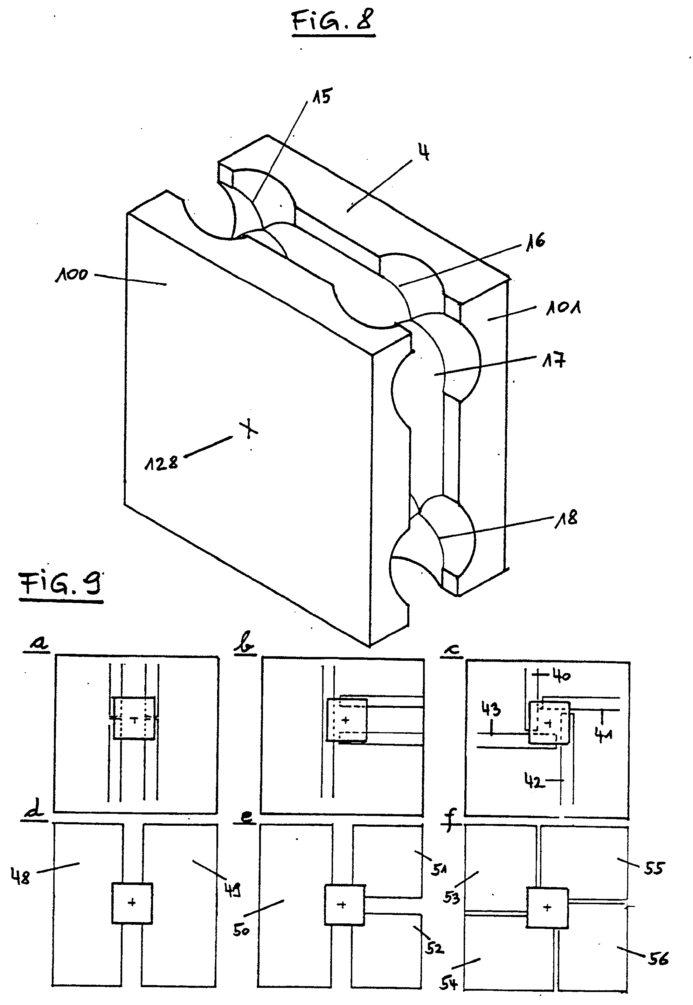

In Fig. 8 ist eine weitere Ausführungsform eines mehrteiligen, zusammensetzbaren Knotenpunktkörpers 4 perspektivisch dargestellt, der in diesem Fall aus einem aus zwei gleichen Hälften 100, 101 aufgebauten Quader besteht, der in seiner Teilungsebene von zwei Paaren einander rechtwinkelig kreuzenden Durchgangsbohrungen 15, 16, 17, 18 durchsetzt ist, die vier seiner sechs Außenflächen durchdringen. In diesen Durchgangsbohrungen können, wie die in Fig. 9a bis f dargestellten Anwendungsbeispiele zeigen, nicht nur parallele stabförmige Körper (Fig. 9a) eingesteckt und durch Zusammenklemmen der beiden Hälften 100 und 101 des Quaders mit Hilfe einer bei 128 schematisch angedeuteten Schraube fest miteinander gekoppelt werden, sondern auch rechtwinkelig zueinander verlaufende, stabförmige Baukörper oder Rohre, wie aus Fig. 9b ersichtlich, oder vier rechtwinkelig aufeinanderstoßende, stabförmige Baukörper 40, 41, 42 und 43, wie dies in Fig. 9c dargestellt ist.

Ferner ist mit Hilfe dieses zweiteiligen, quaderförmigen Knotenpunktkörpers 4 ein Verbindungsmittel für in einer Ebene anzuordnende Wand- und Bodenplatten 48, 49 gegeben, wie aus Fig. 9d ersichtlich, oder von drei solchen Platten 50, 51 und 52, wie aus Fig. 9e hervorgeht, oder auch von vier derartiger plattenförmiger Körper 53, 54, 55 und 56, die in diesem Fall, wie in Fig. 9f dargestellt, jeweils mit einer ihrer vier Ecken von dem Knotenpunktkörper erfaßt werden.

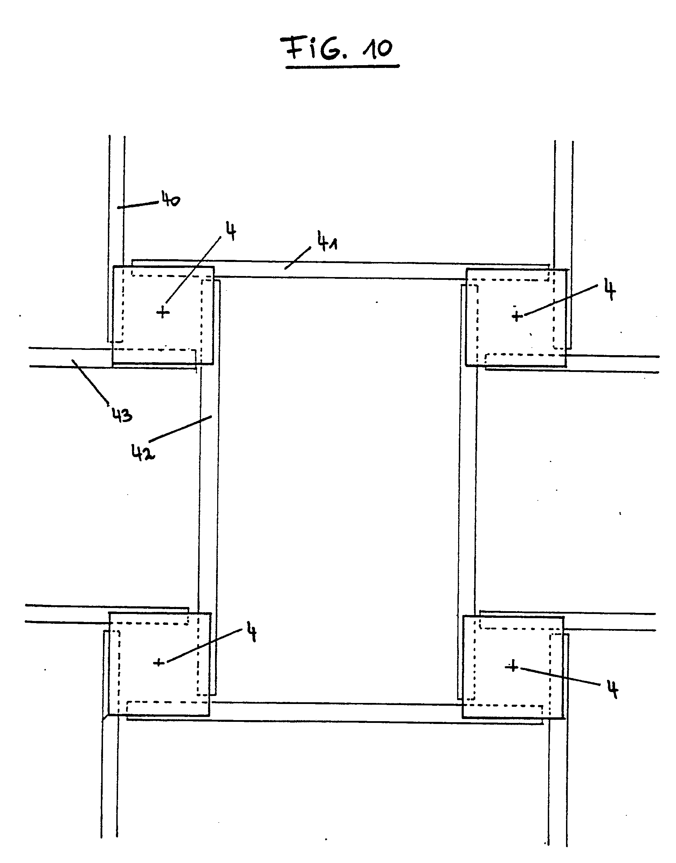

Eine der Darstellung von Fig. 9c ähnliche Anordnung eines Knotenpunktkörpers 4 als Verbindungsmittel von vier aufeinanderstoßenden stabförmigen Bauteilen 40, 41, 42 und 43 zeigt Fig. 10, wobei jedoch beispielshalber vier derartige Knotenpunktkörper in einer Ebene nebeneinanderliegen. Dieses Verbindungsbeispiel soll verdeutlichen, daß solche Knotenpunktkörper beispielsweise als Halterungen für abzuhängende Raumdecken Verwendung finden können, wobei dann an den stabförmigen Baukörpern, die die einzelnen Knotenpunktkörper miteinander verbinden, die Deckenelemente angehängt werden.

Besondere Ausführungsbeispiele für die Anwendung des hier beschriebenen Baukastensystems zeigen die Fig. 11 und 12, wobei in Fig. 11 ein Schreibtisch 80 gezeigt ist, dessen vier Beine 76, 77, 129, 130 aus je zwei parallelen Rohren der in Fig. 1 mit 31 und 32 bezeichneten Art bestehen, die durch Knotenpunktkörper 1 oder 120 festgehalten sind, welche gleichzeitig als Halterungen für die Kastenelemente 131, 132 bzw. den Zwischenboden 133 dienen. Der Aufbau dieser Kastenelemente kann in der in Fig. 6 dargestellten Weise erfolgen, also mittels Rahmenkörper 87, die mit entsprechenden Füllungen 88a versehen werden, bzw. plattenförmigen Wandkörpern 88, 89. Für den Zwischenboden 133 ist der gleiche Aufbau aus einem Rahmenkörper 87 mit Füllung denkbar.

An den oberen Enden der Schreibtischbeine sind Knotenpunktkörper der mit 4 in Fig. 8 bezeichneten Art angebracht, die gleichzeitig die waagrechten, stabförmigen Baukörper aufnehmen, die die oberen Enden der Schreibtischbeine miteinander verbinden, so daß ein massives Traggestell für die genannten Kästen und Böden des Schreibtisches entsteht, das die in Fig. 11 mit gestrichelten Linien eingezeichnete Schreibtischplatte aufnimmt.

Fig. 12 dient der Demonstration des Aufbaus eines Arbeitsplatzes 81, der mit elektrischen Überwachungsgeräten 134, 135, 136 sowie zugehörigen Konsolen 137, 138, 139 ausgestattet ist, die auf horizontal verlaufenden, schienenförmigen Bauteilen, der in Fig. 7 mit 35 und 36 bezeichneten Art mittels hier beschriebener Knotenpunktkörper verschiebbar angeordnet sind, wobei die horizontalen Schienen ihrerseits an ihren Enden über Knotenpunktkörper 3 oder 4 in gewünschten Höhen bzw. Abständen vom Boden an senkrechten Beinen angeklemmt sind, die beispielsweise den stabförmigen Baukörpern 33 und 34 in Fig. 7 oder 37 und 38 in Fig. 3 entsprechen können. Falls diese stabförmigen Bauteile aus Rohren bestehen, wie dies üblicherweise der Fall ist, können durch deren Hohlräume die für die elektrischen Geräte notwendigen Leitungen geführt werden, wie dies in Fig. 12 bei 140 angedeutet ist. Im übrigen zeigen die in dieser Zeichenfigur befindlichen Richtungspfeile die Möglichkeit der Verschiebung bzw. Verschwenkung der elektrischen Geräte an. Auch in diesem Fall ist der Einbau einer Arbeitsplatte in Tischhöhe denkbar, die hier nur in gestrichelten Linien angedeutet ist.

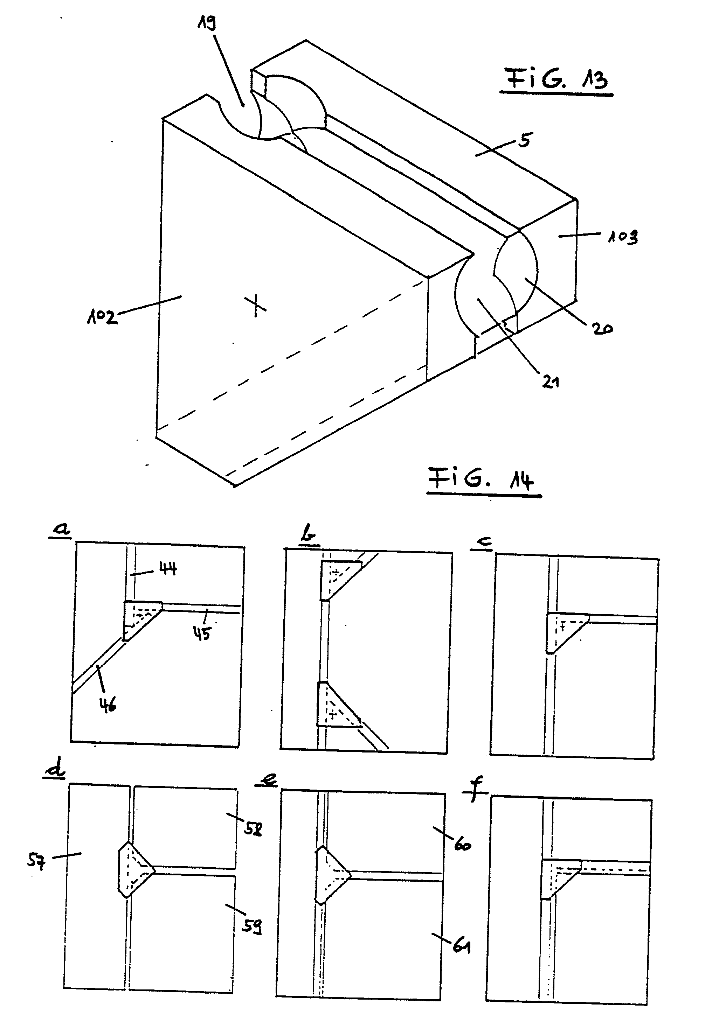

Der Knotenpunktkörper kann auch, wie in Fig. 13 bei 5 dargestellt, ein aus zwei gleichen Hälften 102 und 103 bestehender Quader etwa dreieckigen Umrisses sein, der in seiner parallel zu zwei einander gegenüberliegenden Seitenflächen verlaufenden Teilungsebene von drei parallel zu die Außenseiten des Dreiecks bildenden Flächen verlaufenden Durchgangsbohrungen 19, 20 und 21 durchsetzt ist. Der Verlauf der Bohrung 21 ist mit gestrichelten Linien angedeutet. Dieser Knotenpunktkörper eignet sich, wie aus den in den in Fig. 14a bis f dargestellten Anwendungsbeispielen hervorgeht, insbesondere zur Verbindung von nicht rechtwinkelig aufeinanderstoßenden stangenförmigen Baukörpern 44, 45, 46 (Fig. 14a), jedoch auch von einem einzigen geraden, stangenförmigen Baukörper mit einem senkrecht auf diesen stoßenden Baukörper (Fig. 14c), oder zwei in einem Winkel auf einen durchgehenden stangenförmigen Baukörper stoßenden Baukörpern dieser Art (Fig. 14b). Des weiteren bietet dieser quaderförmige Knotenpunktkörper auch die Möglichkeit der Verbindung von drei plattenförmigen Baukörpern 57, 58 und 59 (Fig. 14d), oder einem stangenförmigen Baukörper mit zwei plattenförmigen Baukörpern 60, 61 (Fig. 14e), und schließlich auch von Bauteilen in anderer Anordnung (Fig. 14f), um nur einige Beispiele für Anwendungsmöglichkeiten dieses Knotenpunktkörpers 5 innerhalb des erfindungsgemäßen Baukastensystems hervorzuheben.

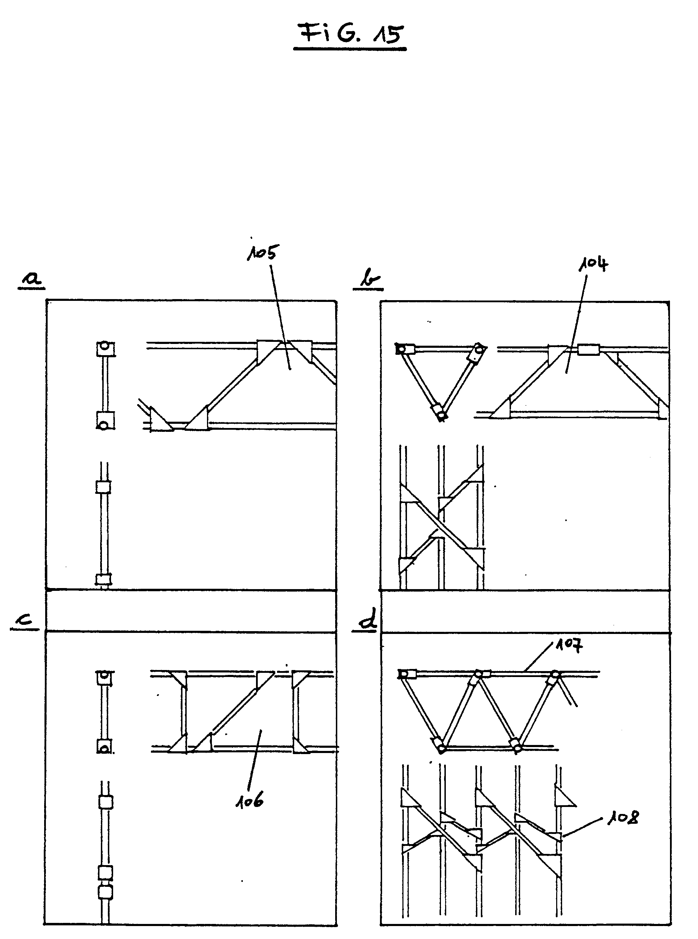

In den Fällen, in denen Fachwerkbinder mit aus Oberzügen und Unterzügen bestehenden stab- oder rohrförmigen Elementen durch schräg verlaufende Verbindungsstäbe miteinander verbunden werden sollen, kann, wie aus Fig. 15a bis d hervorgeht, der Knotenpunktkörper 5 von Fig. 13 auch als Diagonalverbinder eingesetzt werden, wie dies bei den in den Fig. 15a bis c in Seiten- und Vorderansicht dargestellten Fachwerkträgern 104, 105 und 106 der Fall ist.

Darüberhinaus zeigt Fig. 15d, daß mit Hilfe derartiger Knotenpunktkörper auch eine Vielzahl paralleler Stäbe durch Verbindungsstäbe miteinander verbunden werden können, wie dies bei 107 bzw. 108 dargestellt ist.

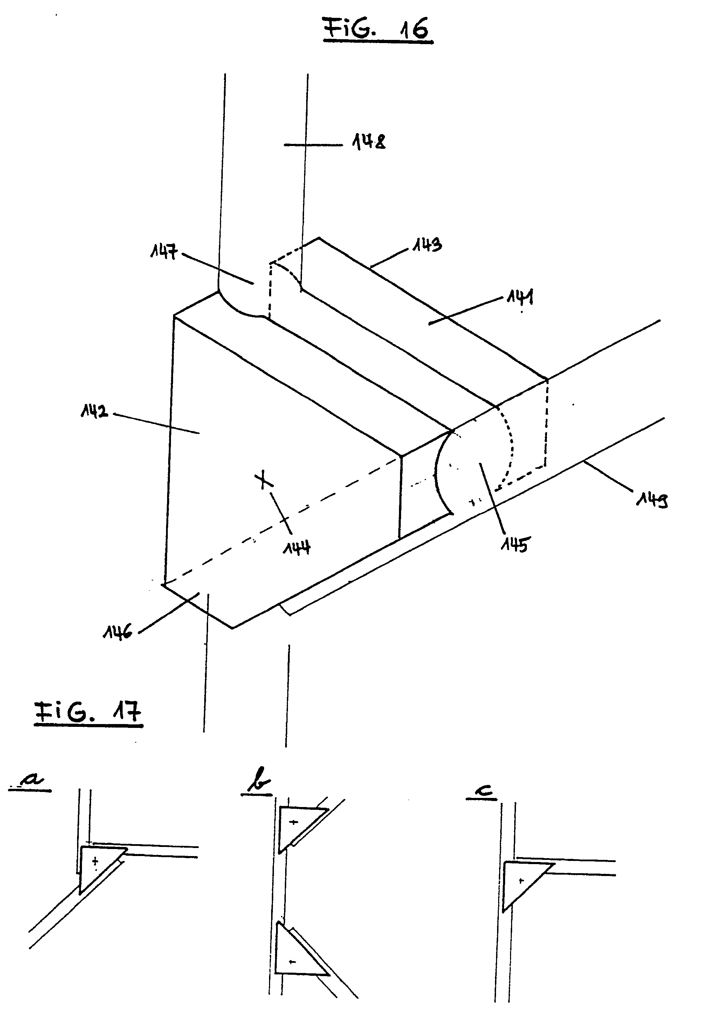

Einen dem quaderförmigen Knotenpunktkörper 5 dreieckigen Umrisses von Fig. 13 ähnlichen Knotenpunktkörper 141 zeigt Fig. 16. Auch dieser Körper besteht aus zwei gleichen Hälften 142, 143, die mit Hilfe einer bei 144 angedeuteten Schraube miteinander verbindbar sind, um die in seine Durchgangsbohrungen 146, 147 eingesteckten stabförmigen Bauteile 149 und 148 durch Klemmwirkung miteinander zu verbinden. Im Unterschied zu dem Knotenpunktkörper 5 sind bei dem Knotenpunktkörper 141 jedoch die drei Durchgangsbohrungen 145, 146, 147, die sich parallel zu den den dreieckförmigen Umriß des Quaders begrenzenden Seitenflächen erstrecken, so weit nach außen gelegt, daß ein Teil der eingespannten stabförmigen Bauteile über diese Außenseiten hinausragt, so daß sich die in Fig. 17a bis c in schematischen Draufsichten dargestellte Verbindungssituation für aufeinanderstoßende, stabförmige Bauteile ergeben.

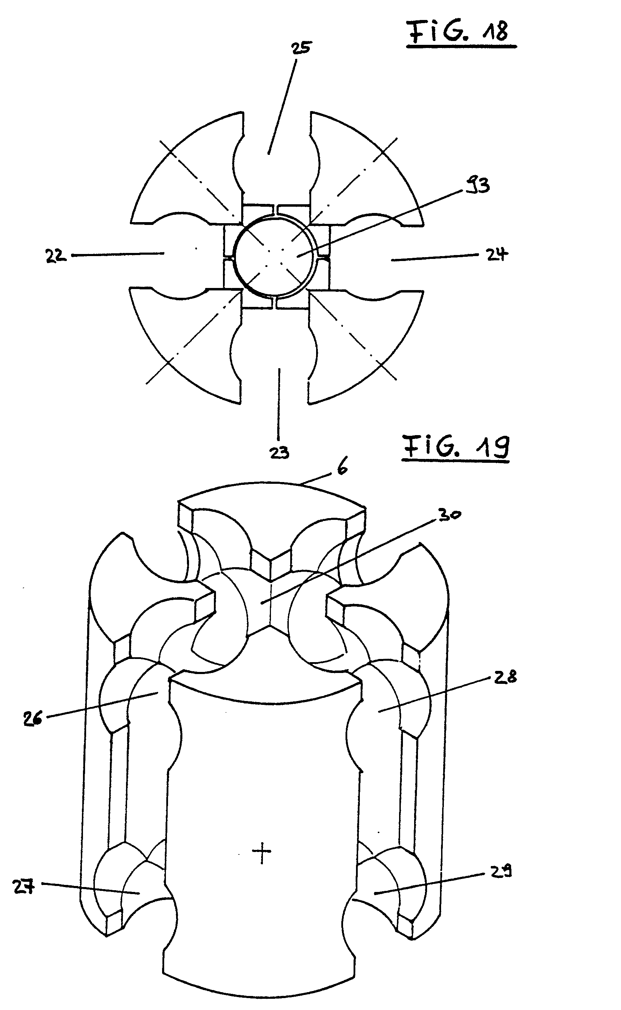

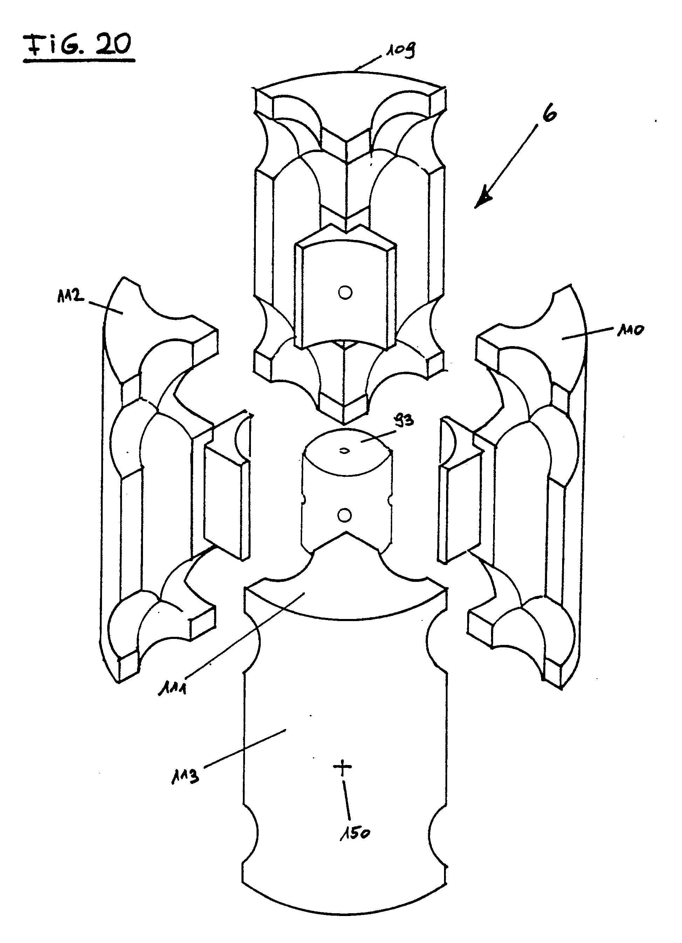

In den Fig. 18 bis 20 ist noch eine andere Ausführungsform eines für das hier beschriebene Baukastensystem verwendbaren mehrteiligen, zusammensetzbaren Knotenpunktkörpers 6 dargestellt, der einen Zylinder aus vier gleichen, axialsymmetrischen Teilen 109, 110, 111 und 112 bildet, welche von vier gleichen, äquidistanten achsparallelen Durchgangsbohrungen 22, 23, 24, 25 und vier weiteren, sich rechtwinkelig kreuzenden und rechtwinkelig zu den achsparallelen Durchgangsbohrungen verlaufenden, den Zylinderumfang 113 durchstoßenden Durchgangsbohrungen 26, 27, 28, 29 durchsetzt ist. Dieser Knotenpunktkörper eröffnet eine Verbindungsmöglichkeit für eine Vielzahl von stangenförmigen und-/oder plattenförmigen Bauteilen, wobei einige Anwendungsbeispiele in den Fig. 21a bis f beispielshalber dargestellt sind. Zu diesem Zweck sind in den Durchgangsbohrungen 22, 23, 24, 25, 26, 27, 28, 29 diese durchquerende (Fig. 21a) oder in ihnen aufeinanderstoßende (Fig. 21b, c und f) stangen- oder rohrförmige Bauteile bzw. Tragelemente festklemmbar oder plattenförmige Tragelemente befestigbar, wie dies die Fig. 21d und e zeigen.

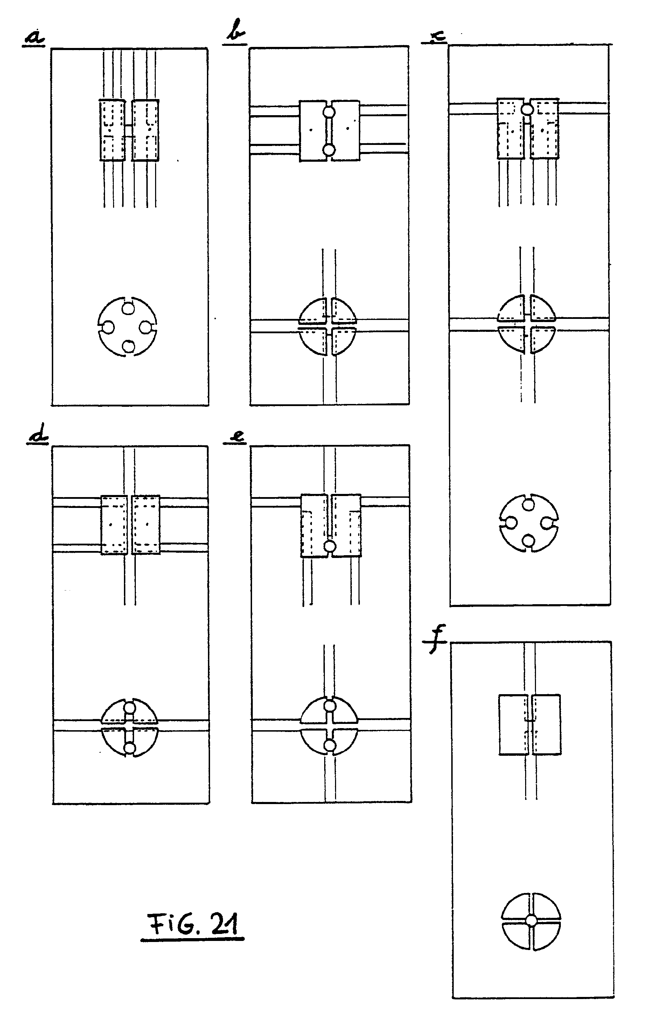

Zur Verbindung der vier gleichen, axialsymmetrischen Teile 109, 110, 111, 112 des Zylinders des Knotenpunktkörpers 6, die sich um eine gemeinsame Achsialbohrung 30 gruppieren, dient ein zylindrischer Kernkörper 93, der in die Bohrung, wie in den Fig. 18 und 20 ersichtlich gemacht, eingesetzt wird und von außen mit in Fig. 20 schematisch angedeuteten Befestigungsschrauben 150, die von allen vier Seiten in den Kernkörper 93 eindringen, zu einem integralen Zylinder zusammengefügt wird, der mit Hilfe seiner Durchgangsbohrungen für die einzelnen stangenförmigen und/oder plattenförmigen Bauteile die-selbe Klemmfunktion erfüllt wie die oben beschriebenen Knotenpunktkörper 1, 2, 3, 4, 5 einfacherer Konfiguration.

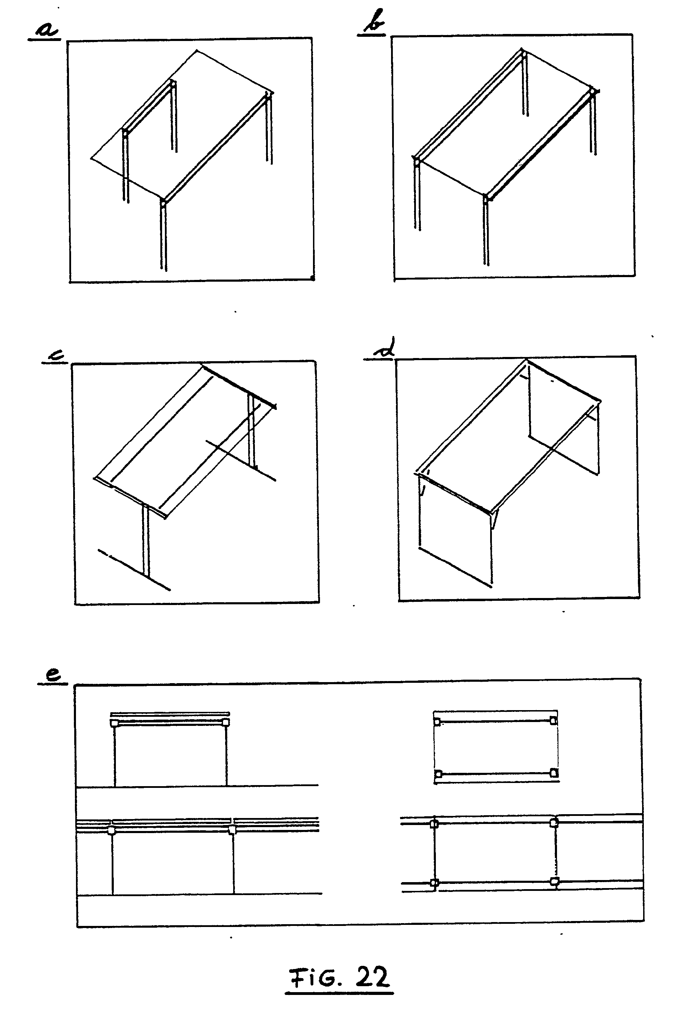

In Fig. 22a bis e sind noch einmal schematisch einige Ausführungsbeispiele für die Anwendung des hier beschriebenen Baukastensystems zur Herstellung von Einrichtungsgegenständen dargestellt. So zeigt Fig. 22a einen asymmetrischen Tisch, Fig. 22b einen üblichen Tisch, dessen vier Beine an den Tischecken angeordnet sind und bei dem die Tischplatte über ihre ganze Länge von sich quer zu den Beinen erstreckenden stabförmigen Bauteilen abgestützt wird.

Fig. 22c zeigt einen aufgeständerten Tisch mit T-förmigen Füßen, wie er möglicherweise als Couchtisch Verwendung findet.

In Fig.22 ist eine Art Arbeits- oder Schreibtisch mit geschlossenen Seitenwandteilen dargestellt, die mit Hilfe der oben beschriebenen, zusammensetzbaren Knotenpunktkörper als Halterungselemente und stangenförmigen und/oder plattenförmigen Baukörpern als Tragelemente aufgebaut werden.

Fig. 22e zeigt die Möglichkeit des Aufbaus von unendlichen Tischen, insbesondere Konferenztischen aus einzelnen Tischelementen, die in dieser Zeichnungsfigur in der oberen Hälfte links als Seitenansicht und rechts als Draufsicht abgebildet sind. Werden mehrere solche Einzeltische an ihren Stirnseiten mit Hilfe der oben beschriebenen Knotenpunktkörper miteinander verbunden, so ergeben sich Tischreihen verschiedener Länge, die im unteren Teil von Fig. 22e in Seitenansicht und Draufsicht beispielshalber angedeutet sind. Selbstverständlich können solche unendlichen Tische auch zu Tischringen zusammengefügt werden, wenn die Platten entsprechende Zuschnitte erhalten. Zu diesem Zweck wäre es beispielsweise nur erforderlich, bei dem in Fig. 22a dargestellten asymmetrischen Tisch die nicht abgestützten Flächen der Tischplatte abzuschneiden und die anzusetzenden Nachbartische mit entsprechend schräg geschnittenen Tischplatten zu versehen.

Für die Knotenpunktkörper, aber auch die stabförmigen Baukörper, hat sich als Material Aluminium besonders bewährt, obgleich auch Kunststoff und andere Metalle Verwendung finden könnten, wenn sie die erforderliche Festigkeit und Formhaltigkeit aufweisen. Die oben beschriebenen Halterungselemente lassen sich an an sich beliebigen Stellen, insbesondere in beliebigen Höhen, an den Tragelementen befestigen. Als Befestigungsmittel dienen beispielsweise Schrauben, Keile, Nieten u. dgl. Jedoch ist auch ein Verschweißen von Halterungs- und Tragelementen möglich, falls die geschaffenen Verbindungen nicht mehr gelöst werden sollen.

## Ansprüche

1. Knotenpunktkörper zum Aufbau von Einrichtungsgegenständen, Gestellen, Fachwerken u. dgl., insbesondere Arbeitsplatzeinrichtungen für Büros, bestehend aus mehreren Komponenten, die durch Tragelemente und Halterungselemente miteinander verbindbar und auf Ständern in bestimmten Höhen über dem Erdboden anbringbar sind, wobei jeder Knotenpunktkörper (3-6) mehrteilig ausgebildet und mit wenigstens einer zweigeteilten Durchgangsbohrung (11-30) versehen ist, und wobei jedes Tragelement ein stangenförmiger (33-46) oder plattenförmiger (47-62) Körper ist, der in die Durchgangsbohrungen (11-30) des Knotenpunktkörpers einsteckbar und durch Zusammenklemmen der einzelnen Teile des Knotenpunktkörpers mit letzteren fest verbindbar ist, wobei in dem Knotenpunktkörper (3-6) wenigstens zwei parallele Durchgangsbohrungen (11, 12 ; 13, 14 ; 15, 16 ; 17, 18 ; 22, 23, 24, 25 ; 26, 27 ; 28, 29) angeordnet sind, durch die sich zentrisch die Teilungsebene bzw. -ebenen des Knotenpunktkörpers erstrecken, dadurch **gekennzeichnet,** daß der Knotenpunktkörper (3, 4) ein entlang zweier aufeinander senkrecht stehender Ebenen in vier gleiche Teile (96-99) geteilter Würfel (3) oder Quader (4) ist, der auf vier seiner sechs paarweise einander gegenüberliegenden Außenseiten von wenigstens je zwei parallelen Durchgangsbohrungen (11-18) durchzogen ist, die zur Aufnahme von wenigstens je einem Tragelement (33-36) dienen, welches beim Zusammenbau der vier Würfel- oder Quaderteile zu dem Knotenpunktkörper (34) mit diesem fest verbindbar ist.

2. Knotenpunktkörper nach Anspruch 1, dadurch **gekennzeichnet**, daß die Durchgangsbohrungen (11-18) in den Teilungsebenen liegen.

3. Knotenpunktkörper zum Aufbau von Einrichtungsgegenständen, Gestellen, Fachwerken u. dgl., insbesondere Arbeitsplatzeinrichtungen für Büros, bestehend aus mehreren Komponenten, die durch Tragelemente und Halterungselemente miteinander verbindbar und auf Ständern in bestimmten Höhen über dem Erdboden anbringbar sind, wobei jeder Knotenpunktkörper (3-6) mehrteilig ausgebildet und mit wenigstens einer zweigeteilten Durchgangsbohrung (11-30) versehen ist, und wobei jedes Tragelement ein stangenförmiger (33-46) oder plattenförmiger (47-62) Körper ist, der in die Durchgangsbohrungen (11-30) des Knotenpunktkörpers einsteckbar und durch Zusammenklemmen der einzelnen Teile des Knotenpunktkörpers mit letzteren fest verbindbar ist, wobei in dem Knotenpunktkörper (3-6) wenigstens zwei parallele Durchgangsbohrungen (11, 12 ; 13, 14 ; 15, 16 ; 17, 18 ; 22, 23, 24, 25 ; 26, 27 ; 28, 29) angeordnet sind, durch die sich zentrisch die Teilungsebene bzw. -ebenen des Knotenpunktkörpers erstrecken, dadurch **gekennzeichnet**, daß der Knotenpunktkörper (6) ein Zylinder aus vier gleichen, axialsymmetrischen Teilen (109-112) ist, der von vier gleichen, äquidistanten, achsparallelen Durchgangsbohrungen (22-25) in den Teilungsebenen und vier weiteren, diese rechtwinkelig kreuzenden und rechtwinkelig dazu verlaufenden, den Zylinderumfang (113) durchstoßenden Durchgangsbohrungen (26-29) durchzogen ist.

4. Knotenpunktkörper nach Anspruch 3, dadurch **gekennzeichnet**, daß die vier gleichen, axialsymmetrischen Teile (109, 112) des Zylinders eine gemeinsame Axialbohrung (30) aufweisen, in die ein zylindrischer Kernkörper (93) als Verbindungselement für diese vier Teile einsetzbar und mit diesen verschraubbar ist.

## Claims

1. Joint assembly for settung-up furniture, racks, frameworks and the like, especially working-place equipments for offices and the like, comprising a plurality of components adapted to be interconnected by means of supporting members and retaining members and to be mounted on stands at certain levels above ground, each nodal-point body (3-6) of said joint assembly forming a multi-part element, provided with at least one through-bore (11-30) divided into two parts, and each supporting member being a rod-like (33-46) or plate-like (47-62) body which can be inserted into the through-bores (11-30) of the nodal-point body and can be securely joint to said nodal-point body by clamping its single parts together, wherein the nodal-point body (3-6) is provided with at least two parallel through-bores (11, 12 ; 13, 14 ; 15, 16 ; 17, 18 ; 22, 23, 24, 25 ; 26, 27 ; 28, 29), through which the plane or planes of division of the nodal-point body centrally extends, **characterized** in that the nodal-point body (3, 4) forms a cube (3) or parallelepiped (4) divided into four identical parts (96-99) along two planes positioned perpendicularly to one another, which cube or parallelepiped is penetrated by at least two parallel through-bores (11-18) on four of its six outer sides opposing each other, which bores accommodate therein at least one respective supporting member (33-36) which upon assembly of the four parts of the cube or parallelepiped to form the nodal-point body (34) is securely joinable thereto.

2. Joint assembly according to claim 1, **characterized** in that the through-bores (11-18) are positioned in the levels of division.

3. Joint assembly for setting-up furniture, racks, frameworks and the like, especially working-place equipments for offices and the like, comprising a plurality of components adapted to be interconnected by means of supporting members and retaining members and to be mounted on stands at certain levels above ground, each nodal-point body (3-6) of said joint assembly forming a multi-part element, provided with at least one through-bore (11-30) divided into two parts, and each supporting member being a rod-like (33-46) or plate-like (47-62) body which can be inserted into the through-bores (11-30) of the nodal-point body and can be securely joint to said nodal-point body by clamping its single parts together, wherein the nodal-part body (3-6) is provided with at least two parallel through-bores (11, 12 ; 13, 14 ; 15, 16 ; 17, 18 ; 22, 23, 24, 25 ; 26, 27 ; 28, 29), through which the plane or planes of division of the nodal-point body centrally extends, **characterized** in that the nodal-point body (6) is a cylinder of four identical, axially symmetrical parts (109-112) penetrated by four idential, equidistant, axis-parallel through-bores (22-25) within the planes of division and four further through-bores (26-29) penetrating a circumference (113) of the cylinder and crossing the first-mentioned through-bores under a right angle and extending rectangularly thereto.

4. Joint assembly according to claim 3, **characterized** in that the four identical, axial-symmetrical parts (109, 112) of the cylinder are provided with a common axial bore (30) into which a cylindrical core body (93) can be inserted and screwed being a connecting element for said four parts.

## Revendications

1. Noix d'assemblage pour éléments d'aménagement, rayonnages, cloisonnages, etc... en particulier pour des installations de postes de travail pour des bureaux, constituée par plusieurs composants qui peuvent être reliés entre eux par des éléments porteurs et des éléments de fixation et être montés sur des supports à des hauteurs déterminées au-dessus du sol, chaque noix d'assemblage (3-6) qui est formée par plusieurs pièces, étant pourvue d'au moins un trou traversant (11-30) en deux parties tandis que chaque élément porteur est un solide en forme de barre (33-46) ou en forme de plaque (47-62) qui peut être engagé dans lesdits trous traversants (11-30) de la noix d'assemblage et être solidement relié avec ladite noix par l'assemblage entre elles des différentes parties constitutives de celle-ci, dans laquelle au moins deux trous traversants parallèles (11, 12 ; 13, 14 ; 15, 16 ; 17, 18 ; 22, 23, 24, 25 ; 26, 27 ; 28, 29) sont disposés dans la noix d'assemblage (3-6), le ou les plans de division de ladite noix d'assemblage s'étendant axialement à travers ceux-ci, noix d'assemblage (3, 4), caractérisée en ce qu'elle est constituée par un dé (3) ou un parallélépipède rectangle (4) divisé en quatre pièces identiques (96-99) le long de deux plans disposés perpendiculairement l'un par rapport à l'autre, qui est traversé sur quatre de ses six faces extérieures disposées par paires en vis-à-vis par au moins respectivement deux trous traversants (11-18) parallèles qui servent à recevoir chacun au moins un élément porteur (33-36) qui se trouve solidement relié avec ladite noix d'assemblage (3, 4) après assemblage des quatre pièces constitutives dudit dé ou dudit parallélépipède.

2. Noix d'assemblage suivant la revendication 1, caractérisée en ce que les trous traversants (11-18) sont situés dans les plans de division.

3. Noix d'assemblage pour éléments d'aménagement, rayonnages, cloisonnages, etc... en particulier pour des installations de postes de travail pour des bureaux, constituée par plusieurs composants qui peuvent être reliés entre eux par des éléments porteurs et des éléments de fixation et être montés sur des supports à des hauteurs déterminées au-dessus du sol, chaque noix d'assemblage (3-6) qui est formée par plusieurs pièces, étant pourvue d'au moins un trou traversant (11-30) en deux parties, tandis que chaque élément porteur est un solide en forme de barre (33-46) ou en forme de plaque (47-62) qui peut être engagé dans lesdits trous traversants (11-30) de la noix d'assemblage et être solidement relié avec ladite noix par l'assemblage entre elles des différentes parties constitutives de celle-ci, dans laquelle au moins deux trous traversants parallèles (11, 12 ; 13, 14 ; 15, 16 ; 17, 18 ; 22, 23, 24, 25 ; 26, 27 ; 28, 29) sont disposés dans la noix d'assemblage s'étendant axialement à travers ceux-ci, noix d'assemblage (6) caractérisée en ce qu'elle est constituée d'un cylindre formé par quatre parties identiques (109-112) à symétrie axiale qui est traversé par quatre trous traversants (22-25) équidistants, parallèles à l'axe situé dans les plans de division et par quatre autres trous traversants (26-29) croisant les précédents à angle droit et s'étendant perpendiculairement à ceux-ci, et perçant la surface extérieure (113) dudit cylindre.

4. Noix d'assemblage suivant la revendication 3, caractérisée en ce que les quatres parties identiques (109-112) à symétrie axiale dudit cylindre présentent un trou central commun (30) dans lequel un noyau cylindrique (93) peut être introduit pour servir d'élément de liaison pour lesdites quatre parties et peut être rendu solidaire de celles-ci par vissage.

FiG. 1

# FIG. 2

FiG. 3

FIG. 4

FIG. 5

FIG.6

FIG.7

## FiG. 8

## FiG. 9

# FIG. 10

FIG. 11

# FIG. 12

FiG. 13

FiG. 14

# FiG. 15

## FiG. 16

148

147    143

141

142

X

144    145

146    149

## FiG. 17

a    b    c

FIG. 18

FIG. 19

FIG. 20

FIG. 21

*a*

*b*

*c*

*d*

*e*

FIG. 22